# FASCICULE DE BREVET EUROPEEN

(11) **EP 0 793 328 B1**
(45) Date de publication et mention de la délivrance du brevet: **20.09.2000**
(21) Numéro de dépôt: 97400282.6
(22) Date de dépôt: 07.02.1997
(51) Int. Cl.: H02K 5/20, H02K 9/19, H02K 9/14

(54) **Carter de refroidissement pour appareil électrique, une machine tournante comportant un tel carter, ainsi que le procédé de fabrication d'un tel carter**
Kühlmantel für elektrische Maschine, elektrische Maschine mit diesem Kühlmantel, und Verfahren zur Herstellung dieses Kühlmantels
Cooling jacket for electrical machine, machine having such a jacket, and process for manufacturing this jacket

(30) Priorité: 28.02.1996 FR 9602503
(43) Date de publication de la demande: 03.09.1997
(73) Titulaire: MOTEURS LEROY-SOMER, F-16000 Angouleme (FR)
(72) Inventeur: Coupart, Eric, 16000 Angouleme (FR); Galais, Michel, 16400 Puymoyen-la Couronne (FR); Lamaison, Guy, 16120 Chateauneuf (FR)
(74) Mandataire: Derambure, Christian

(56) Documents cités:
- EP-A- 0 177 925
- EP-A- 0 631 365
- US-A- 3 009 072

## Description

L'invention concerne un carter de refroidissement pour appareil électrique, une machine tournante comportant un tel carter, ainsi que le procédé de fabrication d'un tel carter.

L'invention s'applique notamment à des carters de refroidissement pour moteur électrique destiné à être utilisé dans des conditions où l'on ne souhaite pas de mouvement d'air, ou lorsque le moteur est dans une enceinte complètement fermée et qu'il doit être refroidi à distance.

Cela étant, l'invention s'applique plus généralement au refroidissement par fluide de tout type d'appareil électrique.

On connaît des carters de refroidissement pour appareil électrique comportant :
- une virole intérieure thermiquement conductrice et destinée à entourer l'appareil électrique ;
- une enceinte extérieure adjacente à la surface extérieure de la virole intérieure, et comportant une entrée d'alimentation et une sortie d'évacuation pour un fluide de refroidissement ;
- un passage pour le fluide de refroidissement, situé entre l'entrée et la sortie.

Le fluide de refroidissement est alors destiné à circuler dans l'enceinte extérieure en passant successivement par l'entrée, dans le passage et par la sortie.

Pour ces carters de refroidissement connus, l'enceinte extérieure est généralement soit un tuyau en cuivre ou en inox entouré en colimaçon autour du carter, soit un canal inséré dans le moule de fabrication du carter, dans son épaisseur.

Dans les deux cas, ce type de structure implique que l'on ait en fait deux parois distinctes entre le moteur à refroidir et le fluide de refroidissement. L'échange thermique qui doit s'opérer pour refroidir le moteur n'est donc pas optimum.

En outre, dans le premier cas, la structure nécessite une pièce de fabrication ajoutée relativement complexe, puisque le canal défini par le tuyau est fermé. Il est donc nécessaire de fabriquer cette pièce par moulage.

Dans le second cas, il n'y a pas de pièce ajoutée, mais la fabrication se fait également par moulage et est donc relativement complexe.

Dans les deux cas, le fluide de refroidissement n'est pas en contact direct avec la virole intérieure, et compte tenu de la structure du canal ménagée par le tuyau ou par la fabrication du moule, la surface de transfert thermique est relativement faible, puisqu'uniquement tangentielle.

La demande de brevet européen 0 631 365 décrit un carter de refroidissement pour moteur comportant un cylindre extérieur et un cylindre intérieur réalisés à partir de plaques de tôle déformées pour obtenir, après avoir soudé leurs extrémités, un passage pour le liquide de refroidissement entre les deux cylindres. Le carter est emmanché à force sur le châssis du moteur.

L'invention vise à pallier les inconvénients précédemment mentionnés.

A cet effet, elle a pour objet un carter de refroidissement tel que précédemment décrit qui permet d'obtenir une surface de transfert thermique beaucoup plus importante, et donc un balayage complet de la virole intérieure.

L'invention concerne en outre un tel carter avec lequel on peut obtenir un débit de circulation du fluide de refroidissement minimum qui permet d'augmenter le temps de passage du fluide de refroidissement, tout en assurant un bon échange convectif entre le fluide et les parois.

Enfin, elle concerne un carter tel que précédemment décrit, qui soit simple à fabriquer et facile à monter.

A cet effet, l'invention propose un carter de refroidissement pour appareil électrique comportant :
- une virole intérieure thermiquement conductrice et destinée à entourer l'appareil électrique ;
- une enceinte extérieure adjacente à la surface extérieure de la virole intérieure, et comportant une entrée d'alimentation et une sortie d'évacuation pour un fluide de refroidissement, se présentant sous la forme d'une pluralité d'ondulations ;
- un passage pour le fluide de refroidissement, situé entre l'entrée et la sortie ; la pluralité d'ondulations délimitant, avec la virole intérieure, ledit passage, le fluide de refroidissement étant en contact thermique avec la virole intérieure.

Selon l'invention, les ondulations sont ménagées de manière telle que le passage comporte deux sections sensiblement parallèles communiquant l'une avec l'autre à l'une de leur extrémité de sorte que l'entrée de fluide et la sortie de fluide se trouvent vers la même autre extrémité libre opposée desdites sections.

Ainsi, le fluide de refroidissement circule dans un premier sens dans la première section, et dans un second sens, dans la seconde section, de sorte que l'on obtient une température sur l'ensemble de la virole sensiblement constante.

Dans le cas où la virole est une pièce de révolution, les ondulations peuvent être telles que le passage s'étend dans un plan sensiblement perpendiculaire à l'axe de révolution de la virole.

Si la virole est de forme sensiblement cylindrique, le passage créé autour de la virole peut être de forme hélicoïdale.

Ainsi, le passage s'étend sur toute la surface de la virole et améliore encore cette surface d'échange thermique.

L'invention concerne en outre une machine tournante électrique comportant un tel carter qui est destiné à entourer le stator de la machine.

Enfin, l'invention concerne un procédé de fabrication d'un tel carter dans lequel :
- on crée tout d'abord les ondulations par déformation plastique de l'enceinte extérieure ;
- on place la virole intérieure à l'intérieur de l'enceinte extérieure ainsi déformée ; et
- on soude de manière étanche l'enceinte extérieure à la virole intérieure par leurs extrémités.

L'ajustement de la virole intérieure dans l'enceinte extérieure s'effectue sans jeu.

Suivant un mode de réalisation,
- on positionne l'élément de base destiné à former l'enceinte extérieure dans un outillage présentant sur ses faces latérales intérieures des ondulations de formes complémentaires à celle que l'on souhaite obtenir ;
- on positionne dans l'enceinte extérieure contre ses parois latérales intérieures un élément en un matériau incompressible ;
- on comprime l'élément de manière à déformer les parois latérales de l'enceinte extérieure et à obtenir les ondulations ;
- on retire l'élément, et
- on emmanche la virole intérieure dans l'enceinte extérieure positionnée dans l'outillage qui a pour fonction de maintenir l'enceinte extérieure dans son état déformé.

L'invention sera mieux comprise à l'aide de la description qui va suivre de modes de réalisation donnés uniquement à titre d'exemple non limitatif, en référence aux dessins annexés dans lesquels :
- la figure 1 est une vue en coupe transversale d'un carter selon l'invention dans lequel, pour simplifier, les ondulations ne sont pas représentées ;
- la figure 2 représente une vue en perspective d'une enceinte extérieure d'un carter selon l'invention ;
- la figure 3 représente une vue en coupe selon la ligne III-III de la figure 2 ;
- la figure 4 est une représentation partielle agrandie des ondulations représentées sur les figures 2 et 3 ;
- la figure 5 est une vue en coupe transversale d'un outillage utilisé pour fabriquer un carter selon l'invention, l'enceinte extérieure ayant été déformée ;
- les figures 6a et 6b sont des vues en coupe transversale des deux matrices de l'outillage de la figure 5.

Le carter de refroidissement 1 est destiné à être utilisé pour le refroidissement d'appareils électriques tels que par exemple des machines tournantes électriques qui ne peuvent être refroidies que par l'intermédiaire d'un fluide de refroidissement.

Le fluide de refroidissement utilisé peut être un liquide ou un gaz.

Le carter de refroidissement 1 comporte une virole intérieure 2 thermiquement conductrice et destinée à entourer l'appareil électrique.

La virole intérieure 2 peut être de différentes formes, et notamment une pièce de révolution présentant un axe de révolution 2a.

Elle peut entourer uniquement la partie à refroidir de l'appareil électrique ou éventuellement l'ensemble de l'appareil électrique.

Par exemple, dans le cas d'une machine tournante électrique, cette partie à refroidir sera le stator.

En outre, dans le cas de la machine tournante électrique, la forme la plus pratique pour la virole intérieure 2 est une forme cylindrique.

Puisque la virole intérieure 2 est destinée à être en contact avec le fluide de refroidissement, elle est de préférence en un matériau non sensible à la corrosion tel que par exemple un alliage métallique résistant à la corrosion.

Le carter 1 comporte en outre une enceinte extérieure 3 adjacente à la surface extérieure 2b de la virole intérieure 2.

Cette enceinte extérieure 3 comporte une entrée 4 d'alimentation et une sortie 5 d'évacuation pour le fluide de refroidissement. Elle est de préférence également en un matériau résistant à la corrosion.

Le carter 1 comporte enfin un passage 6 pour le fluide de refroidissement ménagé entre l'entrée 4 et la sortie 5.

Selon l'invention, l'enceinte extérieure 3 se présente sous la forme d'une pluralité d'ondulations 7 délimitant, avec la virole intérieure 2, le passage 6.

Le fluide de refroidissement est alors susceptible d'être en contact thermique avec la virole intérieure 2.

Suivant un premier mode de réalisation, les ondulations 7 sont telles que le passage 6 s'étend dans un plan sensiblement perpendiculaire à l'axe de révolution 2a de la virole intérieure 2.

Cela étant, on peut prévoir d'autres modes de réalisation où le passage 6 s'étend par exemple sensiblement parallèlement à l'axe de révolution 2a de la virole 2.

Dans l'exemple représenté sur les figures 2 et 3, on peut voir que le passage 6 s'étend dans un plan perpendiculaire à l'axe de révolution 2a et est en outre de forme hélicoïdale et donc incliné par rapport à l'axe de révolution 2a.

On peut également prévoir que les ondulations 7 soient telles que le passage 6 s'étend rigoureusement perpendiculairement à l'axe de révolution 2a.

Selon l'invention, tel que représenté par exemple à la figure 3, les ondulations 7 sont telles que le passage 6 comporte deux sections 8 et 9 sensiblement parallèles communiquant l'une avec l'autre, à l'une de leurs extrémités 8a et 9a, de sorte que l'entrée de fluide 4 et la sortie de fluide 5 se trouvent vers la même autre extrémité 8b et 9b libre opposée desdites sections 8 et 9.

La communication entre les deux sections 8 et 9 peut être obtenue par exemple par l'intermédiaire d'un anneau 10, ou d'un coude 10a.

Les ondulations 7 selon l'invention définissent donc un serpentin se présentant comme un "double filet" avec une liaison d'extrémité.

En outre, pour permettre un montage plus facile avec une source de fluide externe (non représentée), les deux extrémités libres 8b et 9b des sections 8 et 9 du passage 6 sont positionnées proches l'une de l'autre dans un plan sensiblement perpendiculaire à l'axe longitudinal 2a de l'enceinte extérieure 3.

Les ondulations 7 peuvent comporter des premières parties 11 en contact avec la surface extérieure 2b de la virole intérieure 2 et des secondes parties 12 distantes de la surface extérieure 2b de la virole intérieure 2 et définissant, avec la virole intérieure 2, le passage 6.

Suivant un exemple de réalisation, les premières parties 11 peuvent être rectilignes et parallèles à la surface 2b de la virole intérieure.

En outre, les secondes parties 12 peuvent avoir une forme en U dont la base 13 est en regard et à distance de la surface extérieure 2b de la virole intérieure 2.

En outre, pour éviter des risques de corrosion de l'enceinte extérieure 3, la largeur de la base 13 des secondes parties 12 est inférieure à la largeur de l'ouverture 15 du U des secondes parties 12, de telle sorte que les bords latéraux 14 du U sont inclinés par rapport à la surface extérieure 2b de la virole intérieure 2.

On peut également prévoir que la base 13 des secondes parties 12 soit rectiligne et parallèle à la surface 2b extérieure de la virole intérieure 2.

Et les bords latéraux 14 peuvent être également rectilignes.

Suivant un mode de réalisation tel que représenté par exemple à la figure 3, les ondulations 7 sont formées d'une succession alternative de premières 11 et secondes 12 parties de largeurs respectives déterminées.

Dans la mesure où le fluide de refroidissement est en contact thermique avec la virole intérieure 2 et l'enceinte extérieure 3, on peut prévoir que ces dernières sont en un matériau identique, tel que notamment un alliage métallique résistant à la corrosion.

Cela étant, autant il est nécessaire que la virole intérieure 2 soit thermiquement conductrice, autant il n'est pas indispensable que l'enceinte extérieure 3 soit en un matériau thermiquement conducteur.

Pour obtenir une bonne étanchéité au niveau de l'entrée 4 d'alimentation et de la sortie 5 d'évacuation, ces dernières peuvent communiquer avec une source de fluide externe (non représentée) par l'intermédiaire d'un canal coudé 16 monté à l'intérieur de la virole intérieure 2.

La structure selon l'invention de l'enceinte extérieure 3 peut être obtenue par déformation plastique et permet ainsi d'avoir une épaisseur pour la virole intérieure 2 comme pour l'enceinte extérieure 3 relativement faible.

En effet, les ondulations 7 ont pour fonction de rigidifier l'enceinte extérieure 3 et permettent ainsi de réduire son épaisseur tout en gardant la même résistance mécanique à la déformation.

Les dimensions de ces épaisseurs sont notamment conditionnées par l'aptitude de l'enceinte à la déformation.

A titre d'exemple non limitatif, l'épaisseur de la virole intérieure 2 est comprise entre 1 et 5 mm, l'épaisseur de l'enceinte extérieure 3 est comprise entre 0,5 et 1,5 mm et l'épaisseur du passage 6 défini et délimité par les ondulations 7 et la virole 2 est comprise entre 1 et 10 mm.

L'invention concerne en outre une machine tournante comportant un carter 1 tel que précédemment décrit. Ce carter est destiné à entourer le stator de la machine tournante.

Enfin, l'invention concerne un procédé de fabrication d'un carter 1 tel que précédemment décrit dans lequel on crée les ondulations 7 par déformation plastique de l'enceinte extérieure 3, on place la virole intérieure 2 à l'intérieur de l'enceinte extérieure 3 ainsi déformée et on soude de manière étanche l'enceinte extérieure 3 à la virole intérieure 2 par leurs extrémités respectives 3b et 2c.

Pour permettre une bonne étanchéité entre les premières parties 12 et la surface extérieure 2b de la virole 2, l'ajustement de l'enceinte extérieure 3 autour de la virole 2 s'effectue sans jeu.

En effet, ce mode de réalisation sans jeu permet notamment de ne pas avoir de problème de purge quelle que soit la position de l'entrée 4 et de la sortie 5.

On peut obtenir un résultat satisfaisant avec un jeu, mais il faut alors que l'entrée 4 et la sortie 5 soient dans une position particulière permettant l'évacuation de l'air.

Pour obtenir un jeu nul entre l'enceinte extérieure 3 et la virole intérieure 2, il est nécessaire d'effectuer un montage avec serrage.

Cependant, l'épaisseur de l'enceinte extérieure 3 étant relativement faible. Cette dernière ne peut donc pas tolérer un effort axial à l'état libre, sans risquer de la déformer.

Par conséquent, pour fabriquer le carter selon l'invention, on procède de la manière suivante :

On utilise un outillage 16 comportant par exemple deux matrices 16a et 16b et une cloche 17 de maintient des deux demi-matrices.

Ces deux demi-matrices 16a et 16b constituent, une fois fixées l'une à l'autre, un évidement 18, destiné à recevoir un élément de base, non représenté, destiné à former l'enceinte extérieure 3.

Les matrices 16a et 16b présentent sur leur face intérieure des ondulations 19 de forme complémentaire à celles 7 que l'on souhaite obtenir sur l'enceinte extérieure 3.

On fixe les matrices 16a et 16b l'une à l'autre par l'intermédiaire de moyens de fixation 20, de manière à obtenir l'évidement 18 souhaité ouvert à chaque extrémité.

On ferme l'une des ouvertures en positionnant la cloche 17 autour des matrices 16a et 16b fixées l'une à l'autre.

On positionne dans l'évidement 18, l'élément de base destiné à former l'enceinte extérieure 3.

On utilise ensuite un élément en matériau incompressible, non représenté, tel que du caoutchouc incompressible pour réaliser l'empreinte de la matrice sur l'élément de base destiné à former l'enceinte extérieur 3.

A cet effet, on positionne dans l'enceinte extérieure 3 contre ses parois latérales intérieures 3c, l'élément en matériau incompressible et on comprime ensuite ledit élément, de manière à déformer les parois latérales 3c de l'enceinte extérieure 3, et à obtenir ainsi les ondulations 7 sur les parois latérales 3c de l'enceinte extérieure 3.

Ensuite, on retire le caoutchouc, mais on laisse l'enceinte extérieure 3 ainsi déformée dans l'évidement 18, de sorte qu'elle est maintenue par les matrices 16a et 16b dans son état déformé.

Ainsi, on peut emmancher la virole intérieure 2 dans l'enceinte extérieure 3 par un montage à force sous presse sans déformer l'enceinte extérieure 3 malgré le fait qu'elle ait une épaisseur relativement faible.

## Revendications

1. Carter (1) de refroidissement pour appareil électrique comportant :
- une virole intérieure (2) thermiquement conductrice et destinée à entourer l'appareil électrique ;
- une enceinte extérieure (3) adjacente à la surface extérieure (2b) de la virole intérieure (2), et comportant une entrée d'alimentation (4) et une sortie d'évacuation (5) pour un fluide de refroidissement, se présentant sous la forme d'une pluralité d'ondulations (7) ;
- un passage (6) pour le fluide de refroidissement, situé entre l'entrée (4) et la sortie (5) ; la pluralité d'ondulations (7) délimitant, avec la virole intérieure (2), ledit passage (6), le fluide de refroidissement étant en contact thermique avec la virole intérieure (2),
caractérisé en ce que les ondulations (7) sont ménagées de manière telle que le passage (6) comporte deux sections (8, 9) sensiblement parallèles communiquant l'une avec l'autre à l'une de leur extrémité (8a, 9a) de sorte que l'entrée (4) de fluide et la sortie (5) de fluide se trouvent vers la même autre extrémité (8a, 9a) libre opposée desdites sections (8, 9).

2. Carter selon la revendication 1, caractérisé en ce que la virole (2) est une pièce de révolution.

3. Carter selon la revendication 2, caractérisé en ce que les ondulations (7) sont telles que le passage (6) s'étend dans un plan sensiblement perpendiculaire à l'axe de révolution (2a) de la virole (2).

4. Carter selon l'une quelconque des revendications 1 à 3, caractérisé en ce que la virole (2) est de forme sensiblement cylindrique.

5. Carter selon l'une quelconque des revendications 1 à 4, caractérisé en ce que le passage (6) est de forme hélicoïdale.

6. Carter selon l'une quelconque des revendications 1 à 5, caractérisé en ce que les deux sections (8, 9) de passage (6) communiquent l'une avec l'autre par l'intermédiaire d'un anneau (10).

7. Carter selon l'une quelconque des revendications 1 à 6, caractérisé en ce que les deux sections (8, 9) de passage (6), communiquent l'une avec l'autre par l'intermédiaire d'un coude (10a).

8. Carter selon l'une quelconque des revendications 1 à 7, caractérisé en ce que les deux extrémités libres (8b, 9b) des sections (8, 9) du passage (6) sont proches l'une de l'autre dans un plan sensiblement perpendiculaire à l'axe longitudinal (3a) de l'enceinte extérieure (3).

9. Carter selon l'une quelconque des revendications 1 à 8, caractérisé en ce que l'entrée (4) et/ou la sortie (5) de fluide communiquent avec une source de fluide externe par l'intermédiaire d'un canal coudé (16) monté à l'intérieur de la virole intérieure (2).

10. Carter selon l'une quelconque des revendications 1 à 9, caractérisé en ce que l'enceinte extérieure (3), une fois positionnée adjacente à la virole intérieure (2), est fixée rigidement à cette dernière par soudage étanche à ses deux extrémités (3b).

11. Carter selon l'une quelconque des revendications 1 à 10, caractérisé en ce que les ondulations (7) comportent :
- des premières parties (11) en contact avec la surface (2b) de la virole intérieure (2) ; et
- des secondes parties (12) distantes de la surface (2b) de la virole (2) et définissant le passage (6).

12. Carter selon la revendication 11, caractérisé en ce que les premières parties (11) sont rectilignes et parallèles à la surface (2b) de la virole (2).

13. Carter selon la revendication 11 ou 12, caractérisé en ce que les secondes parties (12) ont une forme en U dont la base (13) est en regard et à distance de la surface (2a) de la virole (2) et présente une largeur (L) inférieure à celle de l'ouverture (14) du U.

14. Carter selon la revendication 13, caractérisé en ce que la base (13) du U est rectiligne et parallèle à la surface (2b) de la virole (2).

15. Carter selon la revendication 13 ou 14, caractérisé en ce que les bords latéraux (15) du U sont rectilignes.

16. Carter selon l'une quelconque des revendications 11 à 15, caractérisé en ce que les ondulations (7) sont formées d'une succession alternative de premières (11) et de secondes (12) parties.

17. Carter selon l'une quelconque des revendications 1 à 16, caractérisé en ce que la virole (2) et l'enceinte extérieure (3) sont en un même matériau tel que notamment un alliage métallique résistant à la corrosion.

18. Carter selon l'une quelconque des revendications 1 à 17, caractérisé en ce que le fluide de refroidissement est un liquide.

19. Carter selon l'une quelconque des revendications 1 à 18, caractérisé en ce que le fluide de refroidissement est un gaz.

20. Machine tournante caractérisé en ce qu'elle comporte un carter selon l'une quelconque des revendications 1 à 19 destiné à entourer le stator de la machine.

21. Procédé de fabrication d'un carter (1) selon l'une quelconque des revendications 1 à 19, caractérisé en ce que :
- on crée les ondulations (7) par déformation plastique de l'enceinte extérieure (3) ;
- on ajuste la virole intérieure (2) à l'intérieur de l'enceinte extérieure (3) ainsi déformée ; et
- on soude de manière étanche l'enceinte extérieure (3) à la virole intérieure (2) par leurs extrémités (3b).

22. Procédé de fabrication selon la revendication 21, caractérisé en ce que l'ajustement de la virole intérieure (2) dans l'enceinte extérieure (3) s'effectue sans jeu.

23. Procédé de fabrication selon la revendication 21 ou 22 dans lequel :
- on positionne l'élément de base destiné à former l'enceinte extérieure (3) dans un outillage (16) présentant sur ses faces latérales intérieures des ondulations (19) de formes complémentaires à celles (7) que l'on souhaite obtenir ;
- on positionne dans l'enceinte extérieure (3) contre ses parois latérales intérieures (3c) un élément en un matériau incompressible ;
- on comprime l'élément de manière à déformer les parois latérales (3c) de l'enceinte extérieure (3) et à obtenir les ondulations (7) ;
- on retire l'élément, et
- on emmanche la virole intérieure (2) dans l'enceinte extérieure (3) positionnée dans l'outillage (16) qui a pour fonction de maintenir l'enceinte extérieure (3) dans son état déformé.

## Patentansprüche

1. Gehäuse (1) zur Kühlung von elektrischen Geräten, umfassend:
- einen thermisch leitenden Innenmantel (2) zur Einfassung des elektrischen Geräts;
- eine an der Außenfläche (2b) des Innenmantels (2) anliegende äußere Einfassung (3), die einen Versorgungseingang (4) und einen Austrittsausgang (5) für ein Kühlmittel umfaßt, der in der Form einer Vielzahl von Wellungen (7) vorliegt;
- ein zwischen dem Eingang (4) und dem Austritt (5) gelegener Durchgang (6) für das Kühlmittel; wobei die Vielzahl der Wellungen (7) mit dem Innenmantel (2) besagten Durchgang (6) einschränken, wobei das Kühlmittel in thermischem Kontakt mit dem Innenmantel (2) steht,
dadurch gekennzeichnet, daß die Wellungen (7) derart ausgespart sind, daß der Durchgang (6) zwei deutlich parallele Abschnitte (8, 9) aufweist, die jeder miteinander an ihren äußeren Enden (8a, 9a) derart miteinander in Verbindung stehen, daß der Eingang (4) des Kühlmittels und der Austritt (5) des Kühlmittels sich gegen das gleiche, andere, freie, gegenüberliegende, äußere Ende (8a, 9a) befinden wie besagte Abschnitte (8, 9).

2. Gehäuse gemäß Anspruch 1, dadurch gekennzeichnet, daß der Mantel (2) ein Rotationsstück ist.

3. Gehäuse gemäß Anspruch 2, dadurch gekennzeichnet, daß die Wellungen (7) derart sind, daß der Durchgang (6) sich zur Rotationsachse (2a) des Mantels (2) in einer deutlich senkrechten Ebene erstreckt.

4. Gehäuse gemäß einem der Ansprüche 1 bis 3, dadurch gekennzeichnet, daß der Mantel (2) eine deutlich zylindrische Form hat.

5. Gehäuse gemäß einem der Ansprüche 1 bis 4, dadurch gekennzeichnet, daß der Durchgang (6) eine spiralförmige Form hat.

6. Gehäuse gemäß einem der Ansprüche 1 bis 5, dadurch gekennzeichnet, daß die zwei Abschnitte (8, 9) des Durchgangs (6) miteinander mittels eines Ringes (10) in Verbindung stehen.

7. Gehäuse gemäß einem der Ansprüche 1 bis 6, dadurch gekennzeichnet, daß die zwei Abschnitte (8, 9) des Durchgangs (6) miteinander mittels einer Biegung (10a) in Verbindung stehen.

8. Gehäuse gemäß einem der Ansprüche 1 bis 7, dadurch gekennzeichnet, daß die zwei äußeren freien Enden (8b, 9b) der Abschnitte (8, 9) des Durchgangs (6) einander in einer deutlich senkrechten Ebene zur Längsachse (3a) der äußeren Einfassung (3) nahe sind.

9. Gehäuse gemäß einem der Ansprüche 1 bis 8, dadurch gekennzeichnet, daß der Eingang (4) und / oder der Austritt (5) des Kühlmittels mit einer äußeren Quelle des Mittels mittels eines in dem Innenmantel (2) angebrachten gebogenen Kanals (16) in Verbindung stehen.

10. Gehäuse gemäß einem der Ansprüche 1 bis 9, dadurch gekennzeichnet, daß die äußere Einfassung (3), sobald sie anliegend im Innenmantel (2) angebracht ist, steif an letzterer mittels festem Anschweißen an ihren zwei äußeren Enden (3b) befestigt wird.

11. Gehäuse gemäß einem der Ansprüche 1 bis 10, dadurch gekennzeichnet, daß die Wellungen (7) umfassen:
- erste, mit der Oberfläche (2b) des Innenmantels (2) in Verbindung stehende Teile (11); und
- zweite, von der Oberfläche (2b) des Mantels (2) entfernte und einen Durchgang (6) definierende Teile (12).

12. Gehäuse gemäß Anspruch 11, dadurch gekennzeichnet, daß die ersten Teile (11) geradlinig und parallel zur Oberfläche (2b) des Mantels (2) sind.

13. Gehäuse gemäß Anspruch 11 oder 12, dadurch gekennzeichnet, daß die zweiten Teile (12) eine U-Form haben, deren Basis (13) gegenüber und entfernt von der Oberfläche (2a) des Mantels (2) ist und eine geringere Breite (L) aufweist als die der Öffnung (14) des U.

14. Gehäuse gemäß Anspruch 13, dadurch gekennzeichnet, daß die Basis (13) des U geradlinig und parallel zur Oberfläche (2b) des Mantels (2) ist.

15. Gehäuse gemäß Anspruch 13 oder 14, dadurch gekennzeichnet, daß die seitlichen Ränder (15) des U geradlinig sind.

16. Gehäuse gemäß einem der Ansprüche 11 bis 15, dadurch gekennzeichnet, daß die Wellungen (17) aus einer wechselnden Folge aus ersten (11) und zweiten (12) Teilen gebildet sind.

17. Gehäuse gemäß einem der Ansprüche 1 bis 16, dadurch gekennzeichnet, daß der Mantel (2) und die äußere Einfassung (3) aus einem selben Material sind, wie insbesondere einer korrosionsbeständigen Metallegierung.

18. Gehäuse gemäß einem der Ansprüche 1 bis 17, dadurch gekennzeichnet, daß das Kühlmittel eine Flüssigkeit ist.

19. Gehäuse gemäß einem der Ansprüche 1 bis 18, dadurch gekennzeichnet, daß das Kühlmittel ein Gas ist.

20. Drehmaschine, dadurch gekennzeichnet, daß sie ein Gehäuse gemäß einem der Ansprüche 1 bis 19 umfaßt, das dazu bestimmt ist, den Stator der Maschine zu umgeben.

21. Verfahren zur Herstellung eines Gehäuses (1) gemäß einem der Ansprüche 1 bis 19, dadurch gekennzeichnet, daß:
- man die Wellungen (7) durch plastische Verformung der äußeren Einfassung (3) herstellt;
- man den Innenmantel (2) an der Innenseite der derart verformten äußeren Einfassung (3) anpaßt; und
- man die äußere Einfassung (3) fest mit dem Innenmantel (2) durch ihre äußeren Enden (3b) verschweißt.

22. Herstellungsverfahren gemäß Anspruch 21, dadurch gekennzeichnet, daß die Anpassung des Innenmantels (2) in der äußeren Einfassung (3) ohne Spielraum erfolgt.

23. Herstellungsverfahren gemäß Anspruch 21 oder 22, in dem:
- man das zur Bildung einer äußeren Einfassung (3) bestimmte Grundelement in ein Werkzeug (16) positioniert, das auf seinen seitlichen Innenflächen Wellungen (19) mit komplementärem Formen zu denen (7), die erreicht werden sollen, aufweist;
- man in der äußeren Einfassung (3) gegen ihre seitlichen Innenwände (3c) ein Element aus nicht zusammendrückbarem Material positioniert;
- man das Element derart zusammendrückt, daß die seitlichen Innenwände (3c) der äußeren Einfassung (3) verformt und Wellungen (7) erreicht werden;
- man das Element herausnimmt und
- man den Innenmantel (2) in der äußeren Einfassung (3) anschäftet, die sich in dem Werkzeug (16) befindet, dessen Funktion in der Beibehaltung der äußeren Einfassung (3) in ihrem verformten Zustand besteht.

## Claims

1. A cooling housing (1) for electrical equipment having:
- a heat-conducting internal ferrule (2) intended to surround the electrical equipment;
- an external enclosure (3) adjacent to the external surface (2b) of the internal ferrule (2), having a supply inlet (4) and a discharge outlet (5) for a cooling fluid, being in the form of a plurality of corrugations (7);
- a passage (6) for the cooling fluid, situated between the inlet (4) and the outlet (5); the plurality of corrugations (7) delimiting, with the internal ferrule (2), the said passage (6), the cooling fluid being in thermal contact with the internal ferrule (2),
characterised in that the corrugations (7) are formed so that the passage (6) has two substantially parallel sections (8, 9) communicating with each other at one of their ends (8a, 9a) so that the fluid inlet (4) and fluid outlet (5) are situated close to the same other opposite free end (8a, 9a) of the said sections (8, 9).

2. A housing according to Claim 1, characterised in that the ferrule (2) is a part formed by revolution.

3. A housing according to Claim 2, characterised in that the corrugations (7) are such that the passage (6) lies in a plane substantially perpendicular to the axis of revolution (2a) of the ferrule (2).

4. A housing according to any one of Claims 1 to 3, characterised in that the ferrule (2) is substantially cylindrical in shape.

5. A housing according to any one of Claims 1 to 4, characterised in that the passage (6) is helical in shape.

6. A housing according to any one of Claims 1 to 5, characterised in that the two sections (8, 9) of the passage (6) communicate with each other by means of an annulus (10).

7. A housing according to any one of Claims 1 to 6, characterised in that the two sections (8, 9) of the passage (6) communicate with each other by means of an elbow (10a).

8. A housing according to any one of Claims 1 to 7, characterised in that the two free ends (8b, 9b) of the sections (8, 9) of the passage (6) are close to each other in a plane substantially perpendicular to the longitudinal axis (3a) of the external enclosure (3).

9. A housing according to any one of Claims 1 to 8, characterised in that the fluid inlet (4) and/or outlet (5) communicate with an external fluid source by means of an angled duct (16) mounted inside the internal ferrule (2).

10. A housing according to any one of Claims 1 to 9, characterised in that the external enclosure (3), once positioned adjacent to the internal ferrule (2), is rigidly fixed to the latter by fluidtight welding at both ends (3b).

11. A housing according to any one of Claims 1 to 10, characterised in that the corrugations (7) have:
- first parts (11) in contact with the surface (2b) of the internal ferrule (2); and
- second parts (12) distant from the surface (2b) of the ferrule (2) and defining the passage (6).

12. A housing according to Claim 11, characterised in that the first parts (11) are rectilinear and parallel to the surface (2b) of the ferrule (2).

13. A housing according to Claim 11 or 12, characterised in that the second parts (12) are in the shape of a U whose base (13) is opposite to and at a distance from the surface (2a) of the ferrule (2) and has a width (L) less than that of the opening (14) of the U.

14. A housing according to Claim 13, characterised in that the base (13) of the U is rectilinear and parallel to the surface (2b) of the ferrule (2).

15. A housing according to Claim 13 or 14, characterised in that the lateral edges (15) of the U are rectilinear.

16. A housing according to any one of Claims 11 to 15, characterised in that the corrugations (7) are formed by an alternating succession of first (11) and second (12) parts.

17. A housing according to any one of Claims 1 to 16, characterised in that the ferrule (2) and the external enclosure (3) are made from the same material such as notably a metallic alloy resistant to corrosion.

18. A housing according to any one of Claims 1 to 17, characterised in that the cooling fluid is a liquid.

19. A housing according to any one of Claims 1 to 18, characterised in that the cooling fluid is a gas.

20. A rotating machine, characterised in that it has a housing according to any one of Claims 1 to 19 intended to surround the stator of the machine.

21. A method of manufacturing a housing (1) according to any one of Claims 1 to 19, characterised in that:
- the corrugations (7) are created by plastic deformation of the external enclosure (3);
- the internal ferrule (2) is fitted to the inside of the external enclosure (3) thus deformed; and
- the external enclosure (3) is sealingly welded to the internal ferrule (2) by their ends (3b).

22. A manufacturing method according to Claim 21, characterised in that the fitting of the internal ferrule (2) in the external enclosure (3) is effected without clearance.

23. A manufacturing method according to Claim 21 or 22, in which:
- the base element intended to form the external enclosure (3) is positioned in an implement (16) having, on its internal side faces, corrugations (19) with shapes complementary to those (7) which it is wished to obtain;
- an element made of non-compressible material is positioned in the external enclosure (3) against its internal side walls (3c);
- the element is compressed so as to deform the side walls (3c) of the external enclosure (3) and to obtain the corrugations (7);
- the element is removed, and
- the internal ferrule (2) is fitted in the external enclosure (3) positioned in the implement (16), whose function is to maintain the external enclosure (3) in its deformed state.
